# EUROPEAN PATENT APPLICATION

(11) **EP 3 836 736 A1**
(43) Date of publication of application: **16.06.2021**
(21) Application number: 19848220.0
(22) Date of filing: 06.08.2019
(51) Int. Cl.: H04W 76/19

(54) **CONNECTION FAILURE RECOVERY METHOD AND DEVICE**

(30) Priority: 08.08.2018 CN 201810898696
(71) Applicant: VIVO MOBILE COMMUNICATION CO., LTD., Dongguan, Guangdong 523860 (CN)
(72) Inventor: KIMBA DIT ADAMOU, Boubacar, Dongguan, Guangdong 523860 (CN); YANG, Xiaodong, Dongguan, Guangdong 523860 (CN); ZHENG, Qian, Dongguan, Guangdong 523860 (CN)
(74) Representative: Winter, Brandl - Partnerschaft mbB
(86) International application number: PCT/CN2019/099344
(87) International publication number: WO 2020/029936

(57) **Abstract**

Embodiments of this disclosure provide a method and a device for connection failure recovery. The method includes: determining a cause of an MCG failure; and performing corresponding connection failure recovery processing and/or reporting information related to the MCG failure based on the cause of the MCG failure.

## Description

### CROSS-REFERENCE TO RELATED APPLICATIONS

This application claims priority to Chinese Patent Application No. 201810898696.2, filed in China on August 08, 2018, which is incorporated herein by reference in its entirety.

### TECHNICAL FIELD

Embodiments of this disclosure relate to the field of communications technologies, and in particular, to a method and a device for connection failure recovery.

### BACKGROUND

In the related art, when a secondary cell group (Secondary Cell Group, SCG) failure (failure) occurs, the actions of a terminal device have already been very clear in the standardization.

However, a master cell group (Master Cell Group, MCG) failure and an SCG failure may have different causes. In the related art, it is not expressly specified how the terminal device performs a connection failure recovery procedure when an MCG failure occurs.

### SUMMARY

An objective of embodiments of this disclosure is to provide a method and a device for connection failure recovery to resolve the problem of how a connection failure recovery procedure is recovered when an MCG failure occurs.

According to a first aspect, a method for connection failure recovery is provided and applied to a terminal device, where the method includes:
determining a cause of a master cell group MCG failure; and
performing corresponding connection failure recovery processing and/or reporting information related to the MCG failure based on the cause of the MCG failure.

According to a second aspect, a method for connection failure recovery is further provided and applied to a first network device, where the method includes:
receiving information related to an MCG failure sent from a terminal device; and
sending the information related to the MCG failure to a second network device or a third network device, where
the first network device serves an SCG, the second network device serves a source MCG, and the third network device serves a target MCG; or
the first network device serves an SCG, the second network device serves a target MCG, and the third network device serves a source MCG.

According to a third aspect, a terminal device is further provided, including:
a determining module, configured to determine a cause of a master cell group MCG failure; and
a processing module, configured to perform corresponding connection failure recovery processing and/or report information related to the MCG failure based on the cause of the MCG failure.

According to a fourth aspect, a first network device is further provided, including:
a receiving module, configured to receive information related to an MCG failure sent from a terminal device; and
a sending module, configured to send the information related to the MCG failure to a second network device or a third network device, where
the first network device serves an SCG, the second network device serves a source MCG, and the third network device serves a target MCG; or
the first network device serves an SCG, the second network device serves a target MCG, and the third network device serves a source MCG.

According to a fifth aspect, a terminal device is further provided, including: a processor, a memory, and a computer program stored in the memory and capable of running on the processor, where when the computer program is executed by the processor, the steps of the method for connection failure recovery according to the first aspect are implemented.

According to a sixth aspect, a network device is further provided, including: a processor, a memory, and a computer program stored in the memory and capable of running on the processor, where when the computer program is executed by the processor, the steps of the method for connection failure recovery according to the second aspect are implemented.

According to a seventh aspect, a computer-readable storage medium is further provided, where the computer-readable storage medium stores a program; and when the program is executed by a processor, the steps of the method for connection failure recovery according to the first aspect or the second aspect are implemented.

In the embodiments of this disclosure, when an MCG failure occurs, a terminal device can determine actions of the terminal device based on a cause of the MCG failure, so that the terminal device can perform corresponding operations for connection failure recovery.

### BRIEF DESCRIPTION OF DRAWINGS

Other advantages and benefits will become apparent to those of ordinary skill in the art by reading detailed description of the optional embodiments below. The accompanying drawings are merely intended to illustrate the objectives of the optional embodiments and are not intended to limit this disclosure. Throughout the accompanying drawings, the same reference numerals represent the same components. In the drawings:
FIG. 1 is a schematic architectural diagram of a wireless communications system according to an embodiment of this disclosure;
FIG. 2 is a flowchart 1 of a method for connection failure recovery according to an embodiment of this disclosure;
FIG. 3 is a flowchart 2 of a method for connection failure recovery according to an embodiment of this disclosure;
FIG. 4 is a structural diagram 1 of a terminal device according to an embodiment of this disclosure;
FIG. 5 is a structural diagram of a first network device according to an embodiment of this disclosure;
FIG. 6 is a structural diagram 2 of a terminal device according to an embodiment of this disclosure; and
FIG. 7 is a structural diagram of a network device according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the protection scope of this disclosure.

Terms "include", "comprise" and any other variants thereof in the specification and claims of the application are intended to cover the non-exclusive inclusion. For example, a process, method, system, product, or device that includes a series of steps or units is not necessarily limited to those expressly listed steps or units, but may include other steps or units not expressly listed or inherent to such process, method, system, product, or device. Moreover, use of "and/or" in the specification and claims represents at least one of the connected objects. For example, A and/or B means three cases: A alone, B alone, or A and B together.

In the embodiments of this disclosure, the terms such as "example" or "for example" are used to represent an example, an illustration, or a description. Any embodiment or design scheme described by "example" or "for example" in the embodiments of this disclosure should not be explained as being more preferred or more advantageous than other embodiments or design schemes. To be precise, the terms such as "example" or "for example" are intended to present a related concept in a specific manner.

The technologies described herein are not limited to long term evolution (Long Term Evolution, LTE)/LTE-Advanced (LTE-Advanced, LTE-A) system, and are also applicable to various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. Terms "system" and "network" are often used interchangeably. The CDMA system may implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system may implement radio technologies such as global system for mobile communication (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are part of the universal mobile telecommunications system (Universal Mobile Telecommunications System, UMTS). LTE and more advanced LTE (such as LTE-A) are new releases of UMTS that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described herein are applicable not only to the above-mentioned systems and radio technologies, but also to other systems and radio technologies.

The following describes the embodiments of this disclosure with reference to the accompanying drawings. A method and a device for connection failure recovery provided in the embodiments of this disclosure may be applied to a wireless communications system. The wireless communications system may be a fifth-generation (fifth-generation, 5G) mobile communications technology system, or an evolved long term evolution (Evolved Long Term Evolution, eLTE) system, or a later evolved communications system.

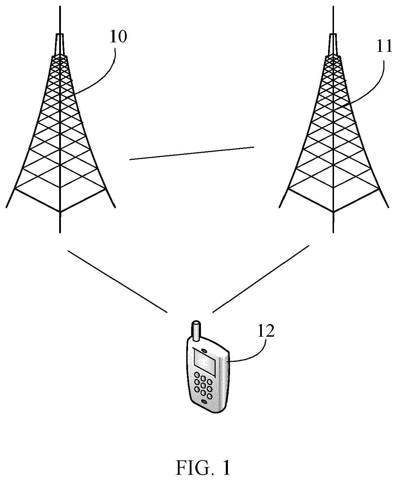

FIG. 1 is a schematic architectural diagram of a wireless communications system according to an embodiment of this disclosure. As shown in FIG. 1, the wireless communications system may include at least two network devices and a terminal device 12. The at least two network devices may include a first network device 10 and a second network device 11, and the terminal device 12 may communicate (transmit signaling or transmit data) with the first network device 10 and the second network device 11. In practical applications, connections between these devices may be wireless connections. For ease of visually representing the connection relationships between the devices, solid lines are used for illustration in FIG. 1.

It should be noted that the foregoing communications system may include a plurality of terminal devices 12, and the first network device 10 and the second network device 11 may communicate with the plurality of terminal devices 12.

It should be noted that the first network device 10 and the second network device 11 in the foregoing communications system may be base stations, and the base stations may be base stations commonly used, or may be evolved base stations (evolved node base station, eNB), or may be devices in a 5G system, for example, network devices (such as next generation base stations (next generation node base station, gNB) or transmission and reception points (transmission and reception point, TRP)).

The terminal device 12 provided in this embodiment of this disclosure may be a mobile phone, a tablet computer, a notebook computer, an ultra-mobile personal computer (Ultra-Mobile Personal Computer, UMPC), a netbook, a personal digital assistant (Personal Digital Assistant, PDA), or the like.

A dual connectivity (Dual Connectivity, DC) scenario is schematically illustrated in FIG. 1. The dual connectivity is a technique introduced into long term evolution (Long Term Evolution, LTE), and is also to be applied to new radio (New Radio, NR). The dual connectivity means that a terminal device can be connected to two base stations at the same time, and the two base stations provide data transmission and reception services for the terminal device at the same time. The service data transmission rate of the terminal device is doubly increased because radio resources of the two base stations can be used at the same time. It can be understood that there is a signaling interface between the two base stations serving the same terminal device, for example, through which the two base stations exchange configuration information of the terminal device with each other.

The base stations serving the terminal device in dual connectivity may use the same radio access technology (Radio Access Technology, RAT), or may use different RATs. For example, both the first network device 10 and the second network device 11 in FIG. 1 may be an LTE eNB, or the first network device 10 may be an LTE eNB, and the second network device 11 may be an NR gNB. It can be understood that this embodiment of this disclosure is applicable to combinations of any types of base stations in dual connectivity, and types of the first network device 10 and the second network device 11 in FIG. 1 are not limited.

One of the base stations serving the terminal device in dual connectivity is a master base station (Master Node, MN), and the other is a secondary base station (Secondary Node, SN). For example, the first network device 10 in FIG. 1 may be the master base station (Master Node, MN), and the second network device 11 may be a secondary base station (Secondary Node, SN). Certainly, no limitation is imposed thereto. A master cell group is a group of serving cells associated with the master base station in dual connectivity, and a secondary cell group is a group of serving cells associated with the secondary base station in dual connectivity.

Each of the base stations serving the terminal device in dual connectivity can support carrier aggregation (Carrier Aggregation, CA). The network may configure two special cells (special cell) for the terminal device in dual connectivity. To be specific, a serving cell of the MN is configured as a primary cell (Primary Cell, PCell) of the terminal device, and a serving cell of the SN is configured as a primary secondary cell (Primary Secondary Cell, PScell). Other cells serving the terminal device are secondary cells (Secondary Cell, Scell) of the terminal device.

It can be understood that, this embodiment of this disclosure is not only applicable to a dual connectivity scenario, but also applicable to a multi-connectivity scenario. Multi-connectivity means that more than two base stations serve the same terminal device. The type of a base station in multi-connectivity is not limited in this embodiment of this disclosure.

Similar to the dual connectivity scenario, one of the base stations serving the terminal device in multi-connectivity is a master base station (Master Node), and other base stations are secondary base stations (Secondary Node). A master cell group is a group of serving cells associated with the master base station in multi-connectivity, and a secondary cell group is a group of serving cells associated with the secondary base stations in multi-connectivity.

In a dual connectivity or multi-connectivity scenario, if an MCG failure occurs because of a bad MCG downlink channel condition, with the technical solution in the embodiments of this disclosure, a terminal device may determine actions of the terminal device based on a cause of the MCG failure, so that the terminal device can perform corresponding operations for connection failure recovery.

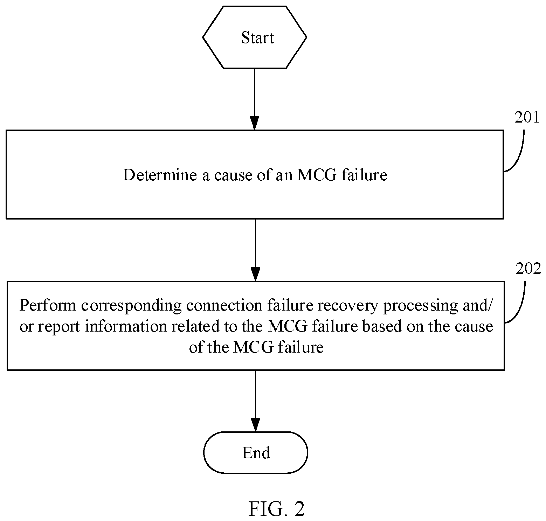

Referring to FIG. 2, an embodiment of this disclosure provides a method for connection failure recovery. The method may be performed by a terminal device, with specific steps as follows:

Step 201: Determine a cause of an MCG failure.

In this embodiment of this disclosure, optionally, the cause of the MCG failure includes at least one of the following:
(1) signaling radio bearer (Signaling Radio Bearers, SRB) integrity check failure (SRB Integrity check failure);
(2) radio resource control (Radio Resource Control, RRC) reconfiguration failure (RRC Reconfiguration failure);
(3) handover failure (Handover failure, HOF) based on a first handover command, where the first handover command includes SCG configuration;
(4) a quantity of uplink transmissions exceeding a threshold, for example, a maximum quantity of uplink transmissions reached;
(5) random access channel (Random Access Channel, RACH) sending failure;
(6) radio link failure (Radio link failure, RLF); and
(7) failure of handover based on a second handover command, where the second handover command does not include SCG configuration.

Step 202: Perform corresponding connection failure recovery processing and/or report information related to the MCG failure based on the cause of the MCG failure.

In this embodiment of this disclosure, optionally, when the cause of the MCG failure is a first cause, an MCG re-establishment procedure or a re-establishment procedure of the terminal device is initiated.

In this embodiment of this disclosure, optionally, when the cause of the MCG failure is the first cause, an MCG re-establishment (Re-establishment) or a re-establishment procedure of the terminal device (RRC Connection Re-establishment procedure) is initiated.

When the cause of the MCG failure is a second cause, an MCG re-establishment procedure or a re-establishment procedure of the terminal device is not initiated, and a suspend (suspend) operation is performed on the MCG. The suspend action on the MCG may include: stopping uplink transmission and downlink reception on the MCG part of a bearer, and/or splitting (split) uplink transmission and downlink reception on the MCG part of the bearer.

The first cause may include at least one of the following: SRB integrity check failure; RRC reconfiguration failure; failure of handover based on a first handover command, where the first handover command includes SCG configuration; a quantity of uplink transmissions exceeding a threshold; and random access channel RACH transmission failure.

In this embodiment of this disclosure, optionally, when the cause of the MCG failure is the second cause, the action includes at least one of the following: skipping initiating an MCG re-establishment procedure or a re-establishment procedure of the terminal device; performing a suspend (suspend) operation on the MCG; and sending information related to the MCG failure to a network device serving an SCG. The second cause may include at least one of the following: radio link failure; and failure of handover based on a second handover command, where the second handover command does not include SCG configuration. The suspend (suspend) operation on the MCG may include: stopping uplink transmission and downlink reception on the MCG part of a bearer, and/or splitting (split) uplink transmission and downlink reception on the MCG part of the bearer.

In this embodiment of this disclosure, optionally, the information related to the MCG failure may include a cause value (Cause value) of the MCG failure.

In this embodiment of this disclosure, optionally, the cause value may include at least one of the following: a first value, a second value, and a third value. The first value indicates a radio link failure, for example, the first value is RLF. The second value indicates a handover failure, for example, the second value is HOF. The third value indicates at least one of the following: T304 timer expiry, T301 timer expiry, maximum quantity of uplink transmissions reached, and RACH transmission failure, for example, when the third value indicates T304 timer expiry, the third value is T304 expiry.

It can be understood that specific forms of the first value, the second value, and the third value are not limited in this embodiment of this disclosure.

In this embodiment of this disclosure, when an MCG failure occurs, a terminal device can determine actions of the terminal device based on a cause of the MCG failure, so that the terminal device can perform corresponding operations for connection failure recovery.

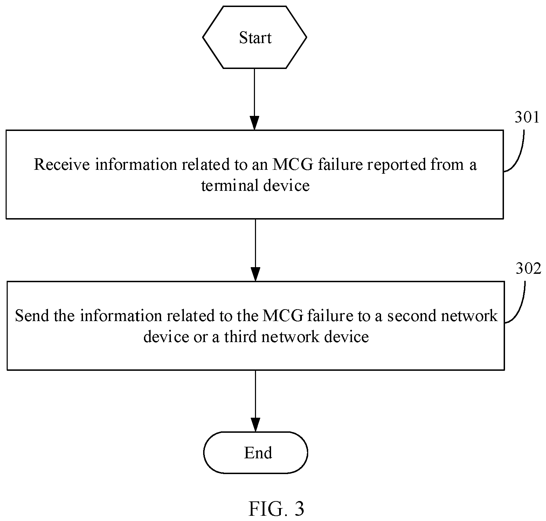

Referring to FIG. 3, an embodiment of this disclosure provides a method for connection failure recovery. The method may be performed by a first network device, with specific steps as follows:
Step 301: Receive information related to an MCG failure sent from a terminal device.

In this embodiment of this disclosure, optionally, the information related to the MCG failure may include a cause value (Cause value) of the MCG failure.

In this embodiment of this disclosure, optionally, the cause value includes at least one of the following: a first value, a second value, and a third value. The first value indicates a radio link failure, for example, the first value is RLF. The second value indicates a handover failure, for example, the second value is HOF. The third value indicates at least one of the following: T304 timer expiry, T301 timer expiry, maximum quantity of uplink transmissions reached, and RACH transmission failure, for example, when the third value indicates T304 timer expiry, the third value is T304 expiry.

It can be understood that specific forms of the first value, the second value, and the third value are not limited in this embodiment of this disclosure.

Step 302: Send the information related to the MCG failure to a second network device or a third network device.

The first network device serves an SCG, the second network device serves a source MCG, and the third network device serves a target MCG; or the first network device serves an SCG, the second network device serves a target MCG, and the third network device serves a source MCG.

In this embodiment of this disclosure, optionally, in step 302, the information related to the MCG failure is sent to the second network device or the third network device based on a cause value of the MCG failure in the information related to the MCG failure.

When the cause value of the MCG failure is the first value (for example, RLF) or the third value (for example, T304 expiry), the information related to the MCG failure is sent to the second network device.

When the cause value of the MCG failure is the second value (for example, HOF), the information related to the MCG failure is sent to the third network device.

In this embodiment of this disclosure, the first network device serving the SCG may send the information related to the MCG failure to the second network device serving the source MCG or the third network device serving the target MCG, so that the actions on network side are determined.

### Example 1

Step 1: When determining an MCG failure, the terminal device may select to initiate different actions based on different causes of the MCG failure, including:
First action: the terminal device initiates an MCG re-establishment procedure or a re-establishment procedure of the terminal device. The cause of the MCG failure includes any one of the following:
(1) SRB integrity check failure (SRB Integrity check failure);
(2) RRC reconfiguration failure (RRC Reconfiguration failure);
(3) handover failure (Handover failure, HOF) based on a handover command, where the handover command includes SCG configuration;
(4) a quantity of uplink transmissions exceeding a threshold; and
(5) RACH transmission failure.

The second action includes at least one of the following: the terminal device skips initiating an MCG re-establishment procedure or a re-establishment procedure of the terminal device; the terminal device performs a suspend operation on the MCG; and the terminal device reports information related to the MCG failure to an SCG. The cause of the MCG failure includes any one of the following:
(1) radio link failure (Radio link failure, RLF); and
(2) handover failure (Handover failure, HOF) based on a handover command, where the handover command does not include SCG configuration.

Step 2: Based on the second action of the terminal device in step 1, the terminal device may further add a cause value (Cause value) of the MCG failure to the information related to the MCG failure reported to the SCG. For example, the cause value of the MCG failure includes any one of the following:
(1) RLF, for radio link failure;
(2) HOF, for handover failure; and
(3) T304 expiry, for T304 timer expiry.

Step 3: When receiving the reported information related to the MCG failure, the SCG forwards the information related to the MCG failure to the source MCG or the target MCG based on the cause value of the MCG failure.

For example, when the cause value of the MCG failure is RLF or T304 expiry, the SCG forwards the information related to the MCG failure to the source MCG; and
when the cause value of the MCG failure is HOF, the SCG forwards the information related to the MCG failure to the target MCG.

The embodiment of this disclosure further provide a terminal device. Because a problem resolving principle of the terminal device is similar to that of the method for connection failure recovery in the embodiments of this disclosure, for implementation of the terminal device, reference may be made to the implementation of the method, and details are not described herein again.

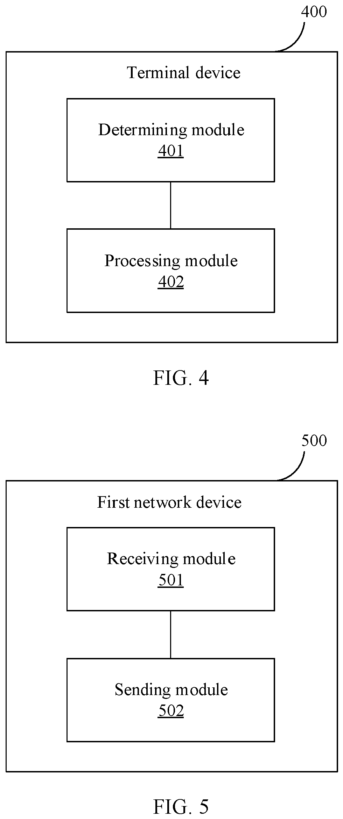

Referring to FIG. 4, an embodiment of this disclosure provides a terminal device. The terminal device 400 includes:
a determining module 401, configured to determine a cause of an MCG failure; and
a processing module 402, configured to perform corresponding connection failure recovery processing and/or report information related to the MCG failure based on the cause of the MCG failure.

In this embodiment of this disclosure, optionally, the processing module 402 is further configured to: when the cause of the MCG failure is a first cause, initiate an MCG re-establishment procedure or a re-establishment procedure of the terminal device.

The first cause includes at least one of the following: SRB integrity check failure; RRC reconfiguration failure; failure of handover based on a first handover command, where the first handover command includes SCG configuration; a quantity of uplink transmissions exceeding a threshold; and random access channel RACH transmission failure.

In this embodiment of this disclosure, optionally, the processing module 402 is further configured to perform at least one of the following: when the cause of the MCG failure is a second cause, skip initiating an MCG re-establishment procedure; when the cause of the MCG failure is a second cause, perform a suspend (suspend) operation on the MCG; and when the cause of the MCG failure is a second cause, send the information related to the MCG failure to a network device serving an SCG.

The second cause includes at least one of the following: radio link failure; and failure of handover based on a second handover command, where the second handover command does not include SCG configuration.

In this embodiment of this disclosure, optionally, the information related to the MCG failure includes a cause value of the MCG failure.

In this embodiment of this disclosure, optionally, the cause value includes at least one of the following: a first value, a second value, and a third value. The first value indicates a radio link failure, the second value indicates a handover failure, and the third value indicates at least one of the following: T304 timer expiry, T301 timer expiry, a maximum quantity of uplink transmissions reached, and RACH transmission failure.

The terminal device provided in this embodiment of this disclosure may perform the foregoing method embodiments, implementation principles and technical effects thereof are similar, and details are not described herein again in this embodiment.

The embodiments of this disclosure further provide a first network device. Because a problem resolving principle of the first network device is similar to that of the method for connection failure recovery in the embodiments of this disclosure, for implementation of the first network device, reference may be made to the implementation of the method, and details are not described herein again.

Referring to FIG. 5, an embodiment of this disclosure provides a first network device. The first network device 500 includes:
a receiving module 501, configured to receive information related to an MCG failure sent from a terminal device; and
a sending module 502, configured to send the information related to the MCG failure to a second network device or a third network device, where
the first network device serves an SCG, the second network device serves a source MCG, and the third network device serves a target MCG; or the first network device serves an SCG, the second network device serves a target MCG, and the third network device serves a source MCG.

In this embodiment of this disclosure, optionally, the information related to the MCG failure includes a cause value of the MCG failure. The sending module 502 is further configured to: send the information related to the MCG failure to the second network device or the third network device based on the cause value of the MCG failure in the information related to the MCG failure.

In this embodiment of this disclosure, optionally, the cause value includes at least one of the following: a first value, a second value, and a third value. The first value indicates a radio link failure, the second value indicates a handover failure, and the third value indicates at least one of the following: T304 timer expiry, T301 timer expiry, a maximum quantity of uplink transmissions reached, and RACH transmission failure.

The sending module 502 is further configured to: when the cause value of the MCG failure is the first value or the third value, send the information related to the MCG failure to the second network device; and when the cause value of the MCG failure is the second value, send the information related to the MCG failure to the third network device.

The first network device provided in this embodiment of this disclosure may perform the foregoing method embodiments, with similar implementation principles and technical effects, and details are not described herein again in this embodiment.

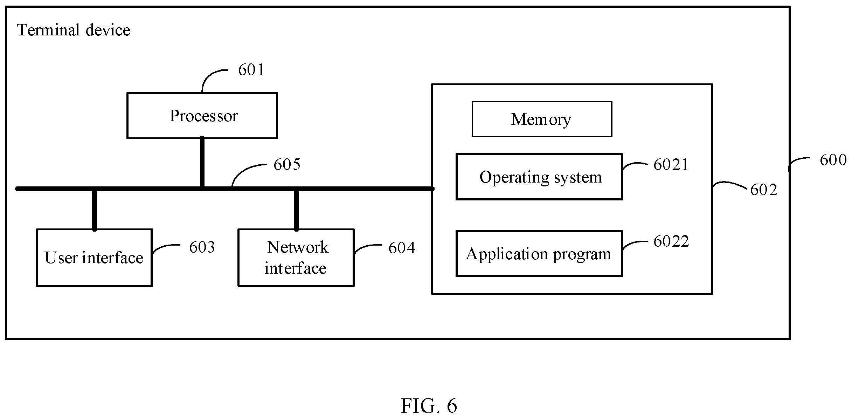

As shown in FIG. 6, a terminal device 600 shown in FIG. 6 includes at least one processor 601, a memory 602, at least one network interface 604, and a user interface 603. The components in the terminal device 600 are coupled together through a bus system 605. It can be understood that the bus system 605 is configured to implement connection and communication between these components. In addition to a data bus, the bus system 605 further includes a power bus, a control bus, and a status signal bus. However, for clarity of description, various buses are marked as the bus system 605 in FIG. 6.

The user interface 603 may include a display, a keyboard, or a pointing device (for example, a mouse, a trackball (trackball), a touch panel, or a touchscreen).

It can be understood that the memory 602 in this embodiment of this disclosure may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. By way of example but not restrictive description, many forms of RAM may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 602 of the system and the method described in the embodiments of this disclosure is intended to include but is not limited to these and any other applicable types of memories.

In some embodiments, the memory 602 stores the following elements: executable modules or data structures, or a subset thereof, or an extended set thereof: an operating system 6021 and an application program 6022.

The operating system 6021 includes various system programs, such as a framework layer, a core library layer, and a driver layer, for implementing various basic services and processing hardware-based tasks. The application program 6022 includes various application programs, such as a media player (Media Player) and a browser (Browser), which are used to implement various application services. A program for implementing the method in the embodiments of this disclosure may be included in the application program 6022.

In one embodiment of this disclosure, by calling and executing the program or instructions stored in the memory 602, which may specifically be the program or instructions stored in the application program 6022, the following steps are implemented: determining a cause of an MCG failure; performing corresponding connection failure recovery processing and/or reporting information related to the MCG failure based on the cause of the MCG failure.

The terminal device provided in this embodiment of this disclosure may perform the foregoing method embodiments, with similar implementation principles and technical effects, and details are not described herein again in this embodiment.

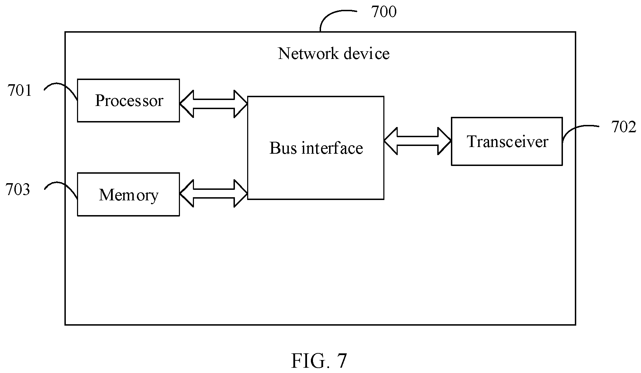

Referring to FIG. 7, FIG. 7 is a structural diagram of a network device applied to an embodiment of this disclosure. As shown in FIG. 7, the network device 700 includes a processor 701, a transceiver 702, a memory 703, and a bus interface.

In one embodiment of this disclosure, the network device 700 further includes a computer program stored in the memory 703 and capable of running on the processor 701. When the computer program is executed by the processor 701, the following steps are implemented: receiving information related to an MCG failure sent from a terminal device; and sending the information related to the MCG failure to a second network device or a third network device, where the network device 700 serves an SCG, the second network device serves a source MCG, and the third network device serves a target MCG.

In FIG. 7, a bus architecture may include any quantity of interconnected buses and bridges, and specifically connect together various circuits of one or more processors represented by the processor 701 and a memory represented by the memory 703. The bus architecture may further interconnect various other circuits such as a peripheral device, a voltage regulator, and a power management circuit. These are all well known in the art, and therefore are not further described in this specification. The bus interface provides interfaces. The transceiver 702 may be a plurality of elements, including a transmitter and a receiver, and provides units configured to perform communication with various other apparatuses over a transmission medium.

The processor 701 is responsible for management of the bus architecture and general processing, and the memory 703 may store data used by the processor 701 when an operation is performed.

The network device provided in this embodiment of this disclosure may perform the foregoing method embodiments, with similar implementation principles and technical effects, and details are not described herein again in this embodiment.

The methods or algorithm steps described through the content disclosed in this disclosure may be implemented by hardware, or may be implemented by a processor by executing a software instruction. The software instruction may include a corresponding software module. The software module may be stored in a RAM, a flash memory, a ROM, an EPROM, an EEPROM, a register, a hard disk, a removable hard disk, a CD-ROM, or a storage medium of any other form known in the art. For example, a storage medium is coupled to the processor, enabling the processor to read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this disclosure may be implemented by hardware, software, firmware, or any combination thereof. In the case of implementation by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any available medium accessible by a general-purpose or dedicated computer.

The objectives, technical solutions, and benefits of this disclosure are further described in detail in the foregoing specific implementations. It should be understood that the foregoing descriptions are merely specific implementations of this disclosure, but are not intended to limit the protection scope of this disclosure. Any modification, equivalent replacement, or improvement made based on the technical solutions in this disclosure shall fall within the protection scope of this disclosure.

A person skilled in the art should understand that the embodiments of this disclosure may be provided as a method, a system, or a computer program product. Therefore, the embodiments of this disclosure may be hardware-only embodiments, software-only embodiments, or embodiments with a combination of software and hardware. Moreover, the embodiments of this disclosure may use a form of a computer program product that is implemented on one or more computer-usable storage media (including but not limited to a disk memory, a CD-ROM, an optical memory, and the like) that include computer-usable program code.

The embodiments of this disclosure are described with reference to the flowcharts and/or block diagrams of the method, the device (system), and the computer program product according to the embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art may make various changes and variations to the embodiments of this disclosure without departing from the spirit and scope of this disclosure. Therefore, this disclosure is intended to cover the changes and variations provided that the changes and variations of the embodiments of this disclosure fall within the scope of the claims of this disclosure or equivalent technologies thereof.

## Claims

1. A method for connection failure recovery, applied to a terminal device, wherein the method comprises:
determining a cause of a master cell group MCG failure; and
performing corresponding connection failure recovery processing and/or reporting information related to the MCG failure based on the cause of the MCG failure.

2. The method according to claim 1, wherein the performing corresponding connection failure recovery processing based on the cause of the MCG failure comprises:
when the cause of the MCG failure is a first cause, initiates an MCG re-establishment procedure or a re-establishment procedure of the terminal device, wherein
the first cause comprises at least one of the following:
signaling radio bearer SRB integrity check failure;
radio resource control RRC reconfiguration failure;
failure of handover based on a first handover command, wherein the first handover command comprises secondary cell group SCG configuration;
a quantity of uplink transmissions exceeding a threshold; and
random access channel RACH transmission failure.

3. The method according to claim 1, wherein the performing corresponding connection failure recovery processing and/or reporting information related to the MCG failure based on the cause of the MCG failure comprises at least one of the following:
when the cause of the MCG failure is a second cause, skipping initiating an MCG re-establishment procedure or a re-establishment procedure of the terminal device;
when the cause of the MCG failure is a second cause, performing a suspend (suspend) operation on the MCG; and
when the cause of the MCG failure is a second cause, sending the information related to the MCG failure to a network device serving an SCG, wherein
the second cause comprises at least one of the following: radio link failure; and failure of handover based on a second handover command, wherein the second handover command does not comprise SCG configuration.

4. The method according to claim 3, wherein the information related to the MCG failure comprises a cause value of the MCG failure.

5. The method according to claim 4, wherein the cause value comprises at least one of the following: a first value, a second value, and a third value, wherein the first value indicates a radio link failure, the second value indicates a handover failure, and the third value indicates at least one of the following: T304 timer expiry, T301 timer expiry, a maximum quantity of uplink transmissions reached, and RACH transmission failure.

6. A method for connection failure recovery, applied to a first network device, wherein the method comprises:
receiving information related to an MCG failure sent from a terminal device; and
sending the information related to the MCG failure to a second network device or a third network device, wherein
the first network device serves an SCG, the second network device serves a source MCG, and the third network device serves a target MCG; or
the first network device serves an SCG, the second network device serves a target MCG, and the third network device serves a source MCG.

7. The method according to claim 6, wherein the information related to the MCG failure comprises a cause value of the MCG failure; and
the sending the information related to the MCG failure to a second network device or a third network device comprises:
sending the information related to the MCG failure to the second network device or the third network device based on the cause value of the MCG failure in the information related to the MCG failure.

8. The method according to claim 7, wherein the cause value comprises at least one of the following: a first value, a second value, and a third value, wherein the first value indicates a radio link failure, the second value indicates a handover failure, and the third value indicates at least one of the following: T304 timer expiry, T301 timer expiry, a maximum quantity of uplink transmissions reached, and RACH transmission failure; and
the sending the information related to the MCG failure to the second network device or the third network device based on the cause value of the MCG failure in the information related to the MCG failure comprises:
when the cause value of the MCG failure is the first value or the third value, sending the information related to the MCG failure to the second network device; and
when the cause value of the MCG failure is the second value, sending the information related to the MCG failure to the third network device.

9. A terminal device, comprising:
a determining module, configured to determine a cause of a master cell group MCG failure; and
a processing module, configured to perform corresponding connection failure recovery processing and/or report information related to the MCG failure based on the cause of the MCG failure.

10. A first network device, comprising:
a receiving module, configured to receive information related to an MCG failure sent from a terminal device; and
a sending module, configured to send the information related to the MCG failure to a second network device or a third network device, wherein
the first network device serves an SCG, the second network device serves a source MCG, and the third network device serves a target MCG; or
the first network device serves an SCG, the second network device serves a target MCG, and the third network device serves a source MCG.

11. A terminal device, comprising a processor, a memory, and a computer program stored in the memory and capable of running on the processor, wherein when the computer program is executed by the processor, the steps of the method for connection failure recovery according to any one of claims 1 to 5 are implemented.

12. A network device, comprising a processor, a memory, and a computer program stored in the memory and capable of running on the processor, wherein when the computer program is executed by the processor, the steps of the method for connection failure recovery according to any one of claims 6 to 8 are implemented.

13. A computer-readable storage medium, wherein the computer-readable storage medium stores a computer program, and when the computer program is executed by a processor, the steps of the method for connection failure recovery according to any one of claims 1 to 8 are implemented.
